# EUROPEAN PATENT SPECIFICATION

(11) **EP 4 322 310 B1**
(45) Date of publication and mention of the grant of the patent: **19.08.2026**
(21) Application number: 23737344.4
(22) Date of filing: 03.01.2023
(51) Int. Cl.: H01M 50/46, H01M 50/533, H01M 50/10, H01M 50/20

(54) **ELECTRODE ASSEMBLY INCLUDING NEGATIVE ELECTRODE HAVING EXTENSION PORTION**
ELEKTRODENANORDNUNG MIT EINER NEGATIVEN ELEKTRODE MIT VERLÄNGERUNGSTEIL
ENSEMBLE D'ELECTRODES COMPRENANT UNE ELECTRODE NEGATIVE AVEC UNE PARTIE D'EXTENSION

(30) Priority: 04.01.2022 KR 20220000873; 22.12.2022 KR 20220182022
(43) Date of publication of application: 14.02.2024
(73) Proprietor: LG Energy Solution, Ltd., Seoul 07335 (KR)
(72) Inventor: AN, In Gu, Daejeon 34122 (KR); KIM, Ki Woong, Daejeon 34122 (KR); HUH, Jun Woo, Daejeon 34122 (KR); KWON, O Jong, Daejeon 34122 (KR); OH, Yun Pyo, Daejeon 34122 (KR); LEE, Da Young, Daejeon 34122 (KR)
(74) Representative: Plasseraud IP
(86) International application number: PCT/KR2023/000059
(87) International publication number: WO 2023/132596

(56) References cited:
- EP-A1- 3 780 221
- KR-A- 20070 073 169
- KR-A- 20160 133 243
- KR-A- 20170 138 253
- KR-A- 20190 124 396
- KR-A- 20210 035 591
- KR-A- 20210 035 591

## Description

### [Technical Field]

This application claims the benefit of priority to Korean Patent Application No. 2022-0000873 filed on January 4, 2022 and Korean Patent Application No. 2022-0182022 filed on December 22, 2022.

The present invention relates to an electrode assembly including a negative electrode having an extension portion, and more particularly to an electrode assembly including a negative electrode having an extension portion capable of preventing deviation of a positive electrode and the negative electrode of the electrode assembly from the alignment position thereof due to external impact or shaking.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

For a lithium ion battery for vehicles, which is used in a hybrid electric vehicle, impact, shaking, or vibration is generated as the result of movement of the vehicle, and such an external factor is transferred to the battery.

An electrode assembly is formed by stacking flat electrodes and separators, and stacking arrangement of the electrode assembly may irregularly changed by external impact, vibration, or shaking in the state in which the electrode assembly is mounted in a device, such as a vehicle. Due to such positional change, a positive electrode and a negative electrode may come into contact with each other, whereby short circuit may occur. In addition, vertical and horizontal positions of the positive electrode and the negative electrode may be changed, whereby an electrode overhang reversal phenomenon may occur, and therefore a lithium deposition problem may occur.

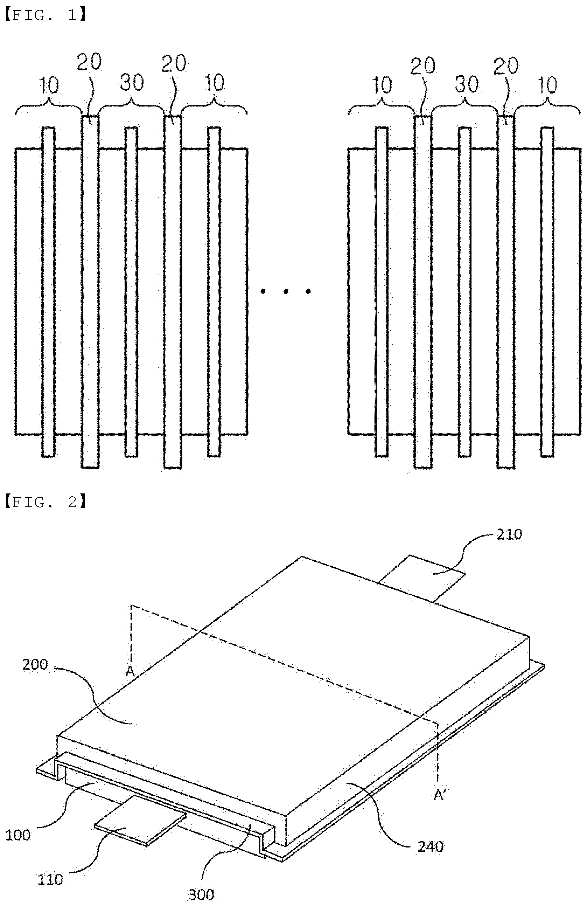

FIG. 1 is a sectional view showing a conventional electrode assembly. As shown in FIG. 1, the conventional electrode assembly is formed as the result of tight contact between a plurality of unit cells, each of which is configured such that a flat positive electrode 10, a separator 20 made of an insulative material, and a flat negative electrode 30 are sequentially stacked.

In the conventional electrode assembly, as shown in FIG. 1, the alignment positions of the positive electrode 10, the separator 20, and the negative electrode 30, each of which is flat, are released due to external impact, shaking, or vibration, whereby the positive electrode 10 and the negative electrode 30 may come into contact with each other, and therefore short circuit may occur.

In addition, as the alignment positions of the positive electrode 10 and the negative electrode 30 are released, an electrode overhang reversal phenomenon may occur at the position at which the amount of a negative electrode active material located on a vertical line and a horizontal line is reduced, whereby lithium may be deposited, and therefore the lifespan of a battery may be reduced, the performance of the battery may be deteriorated, and the battery may be defective. In addition, secondary damage, such as fire outbreak, may occur due to such a phenomenon.

### (Prior Art Document)

(Patent Document 1) Korean Patent Application Publication No. 2019-0065147
EP 3 780 221 A1, and KR 2021 0035591 disclose an electrode assembly having an extension portion in the negative electrode.

### [Disclosure]

### [Technical Problem]

The present invention has been made in view of the above problems, and it is an object of the present invention to provide an electrode assembly including a negative electrode having an extension portion capable of fixing the positions of a positive electrode and a negative electrode, thereby preventing the occurrence of short circuit due to contact between the positive electrode and the negative electrode.

It is another object of the present invention to provide an electrode assembly including a negative electrode having an extension portion capable of preventing vertical and horizontal dislocation of a positive electrode and a negative electrode, thereby preventing the occurrence of an electrode overhang reversal phenomenon.

### [Technical Solution]

In order to accomplish the above objects, an electrode assembly is defined in the appended set of claims, the electrode assembly includes a negative electrode having an extension portion according to the present invention includes a positive electrode (100) including a positive electrode tab (110) protruding from one outer end of the positive electrode and a positive electrode active material (120) applied to a positive electrode current collector (130); a negative electrode (200) including a negative electrode tab (210) protruding from one outer end of the negative electrode and a negative electrode active material (220) applied to a negative electrode current collector (230); and a separator (300) located between the positive electrode and the negative electrode, wherein an extension portion (240) is formed at an edge of the negative electrode (200) so as to extend from the negative electrode by a predetermined length; and a bent portion (310) is formed at an edge of the separator (300), the bent portion being bent by a predetermined angle so as to wrap a part of a side surface of the positive electrode (100).

Also, in the electrode assembly according to the present invention, the extension portion (240) may be formed at each one of opposite side edges of the negative electrode (200).

Also, in the electrode assembly according to the present invention, the extension portion (240) may be formed at each one of opposite side edges, a front edge, and a rear edge of the negative electrode (200).

Also, in the electrode assembly according to the present invention, the extension portion (240) may be formed at a part of the edge of the negative electrode (200).

Also, in the electrode assembly according to the present invention, the extension portion (240) includes a lower end having a convex-concave shape.

Also, in the electrode assembly according to the present invention, the extension portion (240) may include a lower end having a wavy shape.

In addition, the present invention provides a battery cell including the electrode assembly.

In addition, the present invention provides a battery module having the battery cell received therein.

### [Advantageous Effects]

As is apparent from the above description, an electrode assembly including a negative electrode having an extension portion according to the present invention has an advantage in that the extension portion is provided at an edge of the negative electrode so as to extend therefrom in a perpendicular direction such that the extension portion wraps a side surface of a positive electrode, whereby it is possible to prevent dislocation of the negative electrode and the positive electrode, and therefore it is possible to inhibit the occurrence of short circuit due to contact therebetween.

In addition, the electrode assembly including the negative electrode having the extension portion according to the present invention has an advantage in that the extension portion is provided at a side surface of the negative electrode, whereby the amount of a negative electrode active material at the position at which the positive electrode and the negative electrode face each other is increased, and therefore it is possible to prevent an electrode overhang reversal phenomenon.

In addition, the electrode assembly including the negative electrode having the extension portion according to the present invention has an advantage in that the capacity of the negative electrode is increased by the extension of the negative electrode, whereby the ratio of the capacity of the negative electrode to the capacity of the positive electrode is increased, and therefore it is possible to reduce a possibility of deposition.

### [Description of Drawings]

FIG. 1 is a sectional view showing a conventional electrode assembly.
FIG. 2 is a perspective view showing an electrode assembly according to a first preferred embodiment of the present invention.
FIG. 3 is a sectional view taken along line A-A' of FIG. 2.
FIG. 4 is a perspective view showing an electrode assembly according to a second preferred embodiment of the present invention.
FIG. 5 is a perspective view showing an electrode assembly according to a third preferred embodiment of the present invention.
FIG. 6 is a perspective view showing an electrode assembly according to a fourth preferred embodiment of the present invention.
FIG. 7 is a perspective view showing an electrode assembly according to a fifth preferred embodiment of the present invention.
FIG. 8 is a sectional view taken along line A-A' of FIG. 7.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrode assembly including a negative electrode having an extension portion according to the present invention will be described with reference to the accompanying drawings.

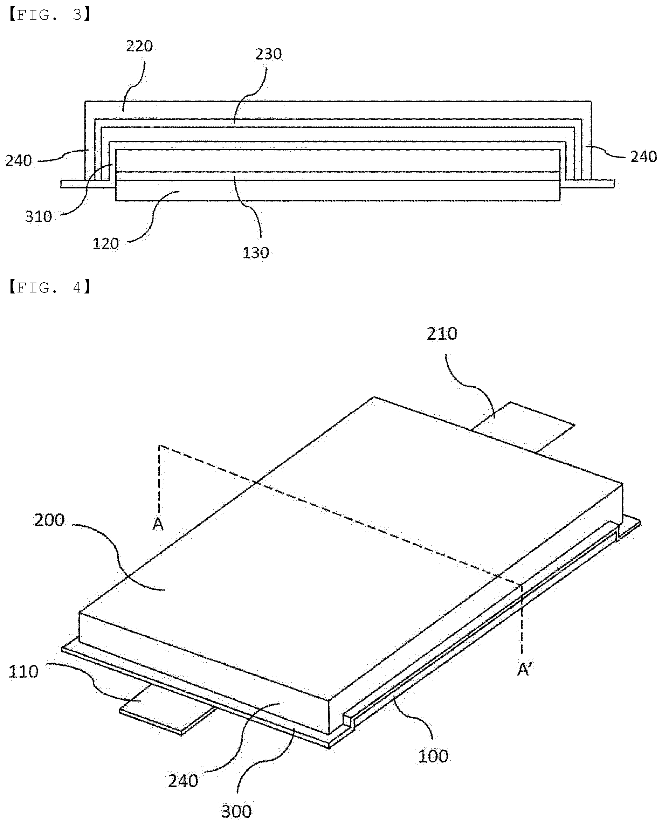

FIG. 2 is a perspective view showing an electrode assembly according to a first preferred embodiment of the present invention, and FIG. 3 is a sectional view taken along line A-A' of FIG. 2.

Referring to FIGs. 2 and 3, the electrode assembly according to the preferred embodiment of the present invention includes a positive electrode 100, a negative electrode 200, and a separator 300 interposed between the positive electrode 100 and the negative electrode 200.

The positive electrode 100 is configured such that a positive electrode tab 110 protrudes from one outer circumferential end of the positive electrode by a predetermined length and a positive electrode active material 120 is applied to a positive electrode current collector 130.

Although each corner of the positive electrode active material 120 applied to the positive electrode current collector 130 is shown as having a right angle in the figures, the corner of the positive electrode active material 120 may be a curved surface having a predetermined curvature or an inclined surface having a predetermined angle.

A layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; Fe₂(MoO₄)₃; or LiNiₓMn₂₋ₓO₄ (0.01 ≤ x≤ 0.6) may be used as the positive electrode active material 120.

Meanwhile, a conductive agent and a binder may be mixed in the positive electrode active material 120, and a filler may be further added as needed.

The conductive agent is generally added so that the conductive agent accounts for 1 to 50 weight% based on the total weight of a mixture including the positive electrode active material 120. The conductive agent is not particularly restricted as long as the conductive agent exhibits high conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is a component assisting in binding between the positive electrode active material 120 and the conductive agent and in binding with the current collector, is generally added in an amount of 1 to 50 weight% based on the total weight of the mixture including the positive electrode active material 120. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

In general, the positive electrode current collector 130 may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale convex-concave pattern formed on the surface thereof so as to increase adhesive force of the positive electrode active material, or may be configured in any of various forms, such as a film, a sheet, a foil, a net, a porous body, a foam body, and a non-woven fabric body.

Next, the negative electrode 200 is configured such that a negative electrode tab 210 protrudes from one outer circumferential end of the negative electrode by a predetermined length, a negative electrode active material 220 is applied to a negative electrode current collector 230, and an extension portion 240 is provided at an edge of the negative electrode 200 so as to extend therefrom in a perpendicular direction by a predetermined length.

Although each corner of the negative electrode active material 220 applied to the negative electrode current collector 230 is shown as having a right angle in the figures, the corner of the negative electrode active material 220 may be a curved surface having a predetermined curvature or an inclined surface having a predetermined angle.

As the negative electrode active material 220, for example, there may be used a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni based material.

The negative electrode current collector 230 is generally manufactured so as to have a thickness of 3 to 500 µm. The negative electrode current collector 230 is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale convex-concave pattern formed on the surface thereof so as to increase binding force of the negative electrode active material, in the same manner as the positive electrode current collector 130, or may be configured in any of various forms, such as a film, a sheet, a foil, a net, a porous body, a foam body, and a non-woven fabric body.

Here, the electrode assembly may be a unidirectional electrode assembly configured such that the positive electrode tab 110 and the negative electrode tab 210 are formed in one direction or a bidirectional electrode assembly configured such that the positive electrode tab 110 is formed in one direction and the negative electrode tab 210 is formed in the other direction.

The extension portion 240, which is configured to extend from opposite side edges of the negative electrode 200 in a perpendicular direction by a predetermined length, is located so as to wrap a side surface of the positive electrode 100, whereby there is an advantage in that it is possible to prevent dislocation between the positive electrode 100 and the negative electrode 200 due to shaking caused by external impact.

In addition, as the result of providing the extension portion 240, it is possible to inhibit an electrode overhang reversal phenomenon that may occur due to dislocation of the positive electrode 100 and the negative electrode 200 due to shaking caused by external impact, vibration, shaking, etc., whereby it is possible to prevent lithium deposition, and therefore there is an advantage in that safety is improved.

Although the extension portions 240 is shown as having a shape wrapping the side surface of the positive electrode 100 in the figures, it is also possible for the negative electrode 200 to wrap the entirety of the positive electrode 100 when the separator 300 further extends so as to wrap the positive electrode 100.

Next, a bent portion 310 is formed at each of opposite side edges of the separator 300 so as to be bent therefrom by a predetermined angle, whereby it is possible to prevent contact between the extension portion 240 and the side surface of the positive electrode 100, and therefore there is an advantage in that it is possible to prevent the occurrence of short circuit.

At this time, the predetermined angle of the separator 300 is formed such that the separator is bent so as to come into tight contact with the side surface of the positive electrode 100. As an example, when the angle between an upper surface and the side surface of the positive electrode 100 is 90°, the separator 300 may be bent by 90° so as to come into tight contact with the side surface of the positive electrode 100.

In addition, the separator 300 is located between the upper surface of the positive electrode 100 and a lower surface of the negative electrode 200 and serves to prevent short circuit and to allow lithium ions to move therethrough. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

FIG. 4 is a perspective view showing an electrode assembly according to a second preferred embodiment of the present invention.

Referring to FIG. 4, the electrode assembly according to the second embodiment of the present invention is identical to the electrode assembly according to the first embodiment described with reference to FIGs. 2 and 3 except for the shape of an extension portion 240 of a negative electrode 200 and the shape of a separator 300, and therefore a description of the same construction will be omitted.

In the electrode assembly according to the second embodiment of the present invention, the extension portion 240 of the negative electrode 200 is formed so as to extend from front and rear edges of the negative electrode 200 in a perpendicular direction by a predetermined length and wraps a front end surface and a rear end surface of a positive electrode 100, whereby it is possible to prevent dislocation of the positive electrode 100 and the negative electrode 200 in a forward-rearward direction, and therefore there is an advantage in that it is possible to further improve stability.

In addition, a bent portion 310 is formed at each of front and rear edges of the separator 300 so as to be bent therefrom by a predetermined angle, whereby it is possible to prevent a front surface and a rear surface of the positive electrode 100 from coming into contact with the extension portion 240.

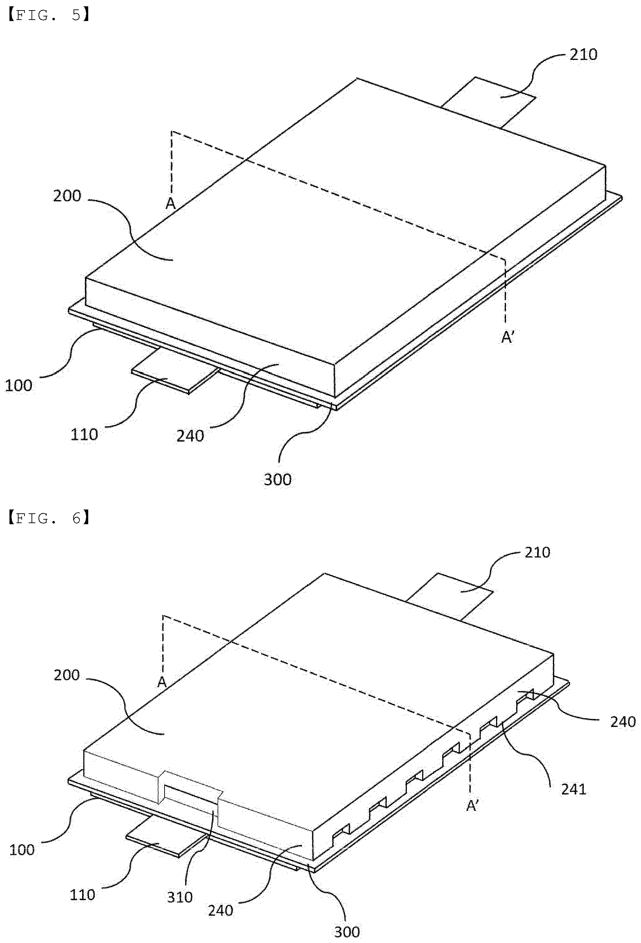

FIG. 5 is a perspective view showing an electrode assembly according to a third preferred embodiment of the present invention.

Referring to FIG. 5, the electrode assembly according to the third embodiment of the present invention is identical to the electrode assembly according to the first embodiment described with reference to FIGs. 2 and 3 except for the shape of an extension portion 240 of a negative electrode 200 and the shape of a separator 300, and therefore a description of the same construction will be omitted.

In the electrode assembly according to the third embodiment of the present invention, the extension portion 240 of the negative electrode 200 is formed so as to extend from opposite sides, a front end, and a rear end of the negative electrode 200 in a perpendicular direction by a predetermined length and wraps opposite side surfaces, a front end surface, and a rear end surface of a positive electrode 100, whereby it is possible to prevent dislocation of the positive electrode 100 and the negative electrode 200 in a leftward-rightward direction and a forward-rearward direction, and therefore there is an advantage in that it is possible to further improve stability.

In addition, a bent portion 310 is formed at each of opposite sides, a front edge, and a rear edge of the separator 300 so as to be bent therefrom by a predetermined angle, whereby it is possible to prevent a side surface of the positive electrode 100 from coming into contact with the extension portion 240.

FIG. 6 is a perspective view showing an electrode assembly according to a fourth preferred embodiment of the present invention.

Referring to FIG. 6, the electrode assembly according to the fourth preferred embodiment of the present invention is identical to the electrode assembly according to the first embodiment described with reference to FIGs. 2 and 3 except for the shape of an extension portion 240 and the shape of a separator 300, and therefore a description of the same construction will be omitted.

In the electrode assembly according to the fourth preferred embodiment of the present invention, an extension portion 240 of a negative electrode 200 may be formed so as to extend from only a part of an edge of the negative electrode 200 in a perpendicular direction.

As an example, a lower end 241 of the extension portion 240 may be formed in a convex-concave shape, as shown in FIG. 6, whereby only a part of a positive electrode 100 is wrapped, and therefore there is an advantage in that it is possible to reduce manufacturing cost while preventing dislocation of the positive electrode 100 and the negative electrode 200 due to external impact.

In addition, the shape of the lower end 241 may be a wavy shape, and the shape of the lower end is not limited thereto as long as it is possible to wrap a part of a side surface of the positive electrode 100, thereby fixing the positive electrode 100 and the negative electrode 200 to each other, and to reduce manufacturing cost.

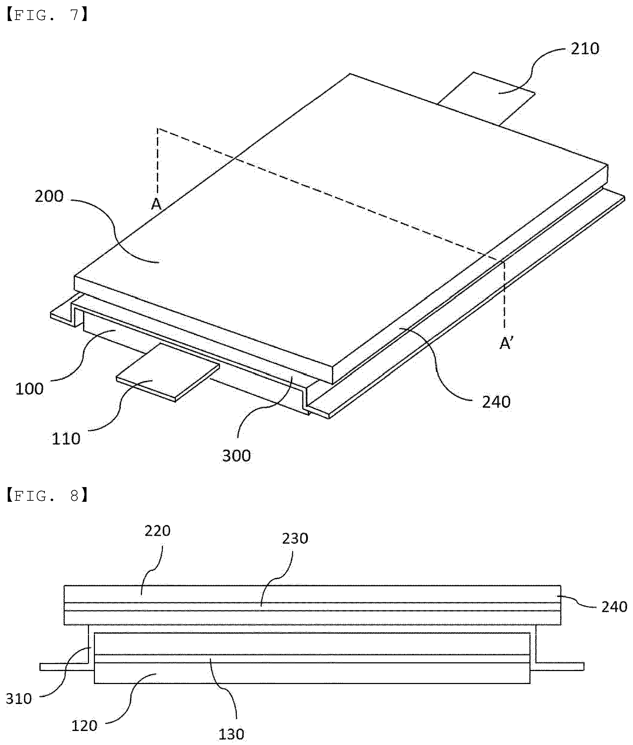

FIG. 7 is a perspective view showing an electrode assembly according to the present disclosure, and FIG. 8 is a sectional view taken along line A-A' of FIG. 7.

Referring to FIGs. 7 and 8, the electrode assembly according to the fifth preferred embodiment of the present invention is identical to the electrode assembly according to the first embodiment described with reference to FIGs. 2 and 3 except for the shape of an extension portion 240, and therefore a description of the same construction will be omitted.

In the electrode assembly according to the fifth preferred embodiment of the present invention, an extension portion 240 of a negative electrode 200 may be formed so as to extend in a direction parallel to the negative electrode 200.

The extension portion 240 does not extend in a lateral direction of a positive electrode 100, whereby the volume of the negative electrode 200 is small, compared to the first embodiment, and therefore it is possible to reduce manufacturing cost.

The present invention may provide a battery cell including the electrode assembly. In addition, the present invention may provide a battery module having the battery cell received therein or a device having the battery module mounted therein. For example, the device may be an electronic device including a large-capacity battery, such as an electric vehicle, a hybrid electric vehicle, or a plug-in hybrid electric vehicle.

In addition, the electrode assembly according to the present invention may be applied to a stacked type battery cell, such as a pouch-shaped battery cell or a prismatic battery cell, and may also be applied to a wound type battery cell having a wound electrode assembly, such as a cylindrical battery cell.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Numerals)

- 100:: Positive electrode
- 110:: Positive electrode tab
- 120:: Positive electrode active material
- 130:: Positive electrode current collector
- 200:: Negative electrode
- 210:: Negative electrode tab
- 220:: Negative electrode active material
- 230:: Negative electrode current collector
- 240:: Extension portion
- 241:: Lower end
- 300:: Separator
- 310:: Bent portion

## Claims

1. An electrode assembly comprising:
a positive electrode (100) including a positive electrode tab (110) protruding from one outer end of the positive electrode and a positive electrode active material (120) applied to a positive electrode current collector (130);
a negative electrode (200) including a negative electrode tab (210) protruding from one outer end of the negative electrode and a negative electrode active material (220) applied to a negative electrode current collector (230); and
a separator (300) located between the positive electrode and the negative electrode, wherein
an extension portion (240) is formed at an edge of the negative electrode so as to extend from the negative electrode by a predetermined length and to extend in a direction toward the positive electrode, and
a bent portion (310) is formed at an edge of the separator, the bent portion being bent by a predetermined angle so as to wrap a part of a side surface of the positive electrode,
wherein the extension portion (240) includes a lower end (241) having a convex-concave shape.

2. The electrode assembly according to claim 1, wherein the extension portion (240) is formed at each one of opposite side edges of the negative electrode (200).

3. The electrode assembly according to claim 1, wherein the extension portion (240) is formed at each one of a front edge and a rear edge of the negative electrode (200).

4. The electrode assembly according to claim 2, wherein the extension portion (240) is formed at each one of opposite side edges, a front edge, and a rear edge of the negative electrode (200).

5. The electrode assembly according to claim 1, wherein the extension portion (240) is formed at a part of the edge of the negative electrode (200).

6. A battery cell comprising the electrode assembly according to any one of claims 1 to 5.

7. A battery module having the battery cell according to claim 6 received therein.

## Patentansprüche

1. Elektrodenanordnung, umfassend:
eine positive Elektrode (100), die eine Ableiterfahne (110) der positiven Elektrode, die von einem äußeren Ende der positiven Elektrode vorsteht, und ein Aktivmaterial (120) der positiven Elektrode, das auf einen Stromsammler (130) der positiven Elektrode aufgebracht ist, einschließt;
eine negative Elektrode (200), die eine Ableiterfahne (210) der negativen Elektrode, die von einem äußeren Ende der negativen Elektrode vorsteht, und ein Aktivmaterial (220) der negativen Elektrode, das auf einen Stromsammler (230) der negativen Elektrode aufgebracht ist, einschließt; und
einen Separator (300), der zwischen der positiven Elektrode und der negativen Elektrode angeordnet ist,
wobei
ein Verlängerungsabschnitt (240) an einer Kante der negativen Elektrode ausgebildet ist, um sich von der negativen Elektrode um eine vorbestimmte Länge zu erstrecken und sich in einer Richtung zu der positiven Elektrode hin zu erstrecken, und
ein gebogener Abschnitt (310) an einer Kante des Separators ausgebildet ist, wobei der gebogene Abschnitt um einen vorbestimmten Winkel gebogen ist, um einen Teil einer Seitenfläche der positiven Elektrode zu umwickeln,
wobei der Verlängerungsabschnitt (240) ein unteres Ende (241) mit einer konvexkonkaven Form einschließt.

2. Elektrodenanordnung nach Anspruch 1, wobei der Verlängerungsabschnitt (240) an jeder von gegenüberliegenden Seitenkanten der negativen Elektrode (200) ausgebildet ist.

3. Elektrodenanordnung nach Anspruch 1, wobei der Verlängerungsabschnitt (240) an jeder von einer vorderen Kante und einer hinteren Kante der negativen Elektrode (200) ausgebildet ist.

4. Elektrodenanordnung nach Anspruch 2, wobei der Verlängerungsabschnitt (240) an jeder von gegenüberliegenden Seitenkanten, einer vorderen Kante und einer hinteren Kante der negativen Elektrode (200) ausgebildet ist.

5. Elektrodenanordnung nach Anspruch 1, wobei der Verlängerungsabschnitt (240) an einem Teil der Kante der negativen Elektrode (200) ausgebildet ist.

6. Batteriezelle, umfassend die Elektrodenanordnung nach einem der Ansprüche 1 bis 5.

7. Batteriemodul mit der darin aufgenommenen Batteriezelle nach Anspruch 6.

## Revendications

1. Ensemble d'électrodes comprenant :
une électrode positive (100) incluant une languette d'électrode positive (110), faisant saillie d'une extrémité extérieure de l'électrode positive, et un matériau actif d'électrode positive (120) appliqué à un collecteur de courant d'électrode positive (130) ;
une électrode négative (200) incluant une languette d'électrode négative (210), faisant saillie d'une extrémité extérieure de l'électrode négative, et un matériau actif d'électrode négative (220) appliqué à un collecteur de courant d'électrode négative (230) ; et
un séparateur (300) situé entre l'électrode positive et l'électrode négative, dans lequel
une partie d'extension (240) est formée au niveau d'un bord de l'électrode négative, de manière à s'étendre depuis l'électrode négative sur une longueur prédéterminée et à s'étendre dans une direction vers l'électrode positive, et
une partie pliée (310) est formée au niveau d'un bord du séparateur, la partie pliée étant pliée selon un angle prédéterminé, de manière à envelopper une partie d'une surface latérale de l'électrode positive,
dans lequel la partie d'extension (240) inclut une extrémité inférieure (241) ayant une forme convexe-concave.

2. L'ensemble d'électrodes selon la revendication 1, dans lequel la partie d'extension (240) est formée au niveau de chacun des bords latéraux opposés de l'électrode négative (200).

3. L'ensemble d'électrodes selon la revendication 1, dans lequel la partie d'extension (240) est formée au niveau de chacun d'un bord avant et d'un bord arrière de l'électrode négative (200).

4. L'ensemble d'électrodes selon la revendication 2, dans lequel la partie d'extension (240) est formée au niveau de chacun des bords latéraux opposés, d'un bord avant et d'un bord arrière de l'électrode négative (200).

5. L'ensemble d'électrodes selon la revendication 1, dans lequel la partie d'extension (240) est formée au niveau d'une partie du bord de l'électrode négative (200).

6. Cellule de batterie comprenant l'ensemble d'électrodes selon l'une quelconque des revendications 1 à 5.

7. Module de batterie comportant la cellule de batterie selon la revendication 6 reçue dans celui-ci.
